# EUROPEAN PATENT SPECIFICATION

(11) **EP 0 301 797 B1**
(45) Date of publication and mention of the grant of the patent: **08.12.1993**
(21) Application number: 88306842.1
(22) Date of filing: 26.07.1988
(51) Int. Cl.: C03B 37/018, G02B 6/10

(54) **Methods of making optical fiber and products produced thereby**
Verfahren zur Herstellung optischer Fasern und dadurch hergestellte Produkte
Procédés de fabrication de fibres optiques et produits ainsi obtenus

(30) Priority: 30.07.1987 US 79732
(43) Date of publication of application: 01.02.1989
(73) Proprietor: AT&T Corp., New York, NY 10013-2412 (US)
(72) Inventor: Michie, Michael M., Duluth Georgia 30136 (US); Nguyen, Quang D., Lilburn Georgia 30247 (US); Ritger, Albert J., Lawrenceville Geogia 30245 (US)
(74) Representative: Johnston, Kenneth Graham

(56) References cited:
- EP-A- 0 055 822
- DE-A- 3 215 791

## Description

This invention relates to chemical vapor deposition methods of making relatively high bandwidth, low loss, multimode optical fiber.

Multimode optical fibers appeared to be on the wane but interest in them has been renewed recently, particularly for use in local area networks. The relatively large core facilitates splicing and permits more efficient energy coupling to a light energy source and to a repeater.

The introduction of many modes into or, alternatively, the generation of many modes within the optical fiber gives rise to a dispersion limitation which takes the form of a smearing due to the differing velocities of different order modes. Mode dispersion effects have been minimized by a continuous focusing structure. This structure takes the form of a fiber, the index of which is graded from a high value at the core center to a lower value at the cladding. The fundamental mode is generally confined to the highest index, corresponding to the lowest velocity region while higher order modes are confined generally to the relatively low index, corresponding to high velocity, regions.

One technique for producing a lightguide fiber for use in communications is referred to as modified chemical vapor deposition (MCVD). It comprises directing a constantly moving stream of gas phase precursor reactants together with oxygen through a glass substrate tube having a generally circular cross-section. The oxygen stream carries silicon tetrachloride and dopants to produce the desired index of refraction in the finished optical fiber. The substrate glass is heated to a homogeneous reaction temperature within a moving zone of heat, also called a hot zone, that traverses constantly the length of the tube, and the consequent reaction produces doped silicon dioxide. The process involves homogeneous reactions that form particles away from the tube wall. The particles come to rest on the tube wall and are fused into a continuous layer on the inner wall of the tube. For each pass of the moving hot zone, a layer of glass formation is deposited. The resulting tube is referred to as a preform tube. Homogeneously produced glass particles collect on the tube walls, and are fused into a continuous layer within the moving hot zone. With the usual heating means, there is a simultaneous heterogeneous reaction so that a glassy layer is produced within the moving hot zone by reaction at the heated wall surface. The substrate tube within which formation is taking place is continuously rotated about its own axis to enhance the uniformity of deposition about the periphery. See U.S. patent 4,217,027.

Continuous fusion within the hot zone and the resultant thickness uniformity of deposit facilitates the formation of an optical structure having a graded index of refraction. Gradients may be produced by varying the composition of the reactants with the ratio of high index-producing dopant increasing, in this instance, with successive hot zone traversals. The manufacture of a preform also includes altering the temperature and/or the flow rate during processing.

Subsequent to a deposition mode, a collapse mode is used to cause the preform tube to become a solid rod-like member which is called a preform. It is this preform from which lightguide fiber is drawn.

In the prior art MCVD processes, a constant amount of silica is caused to be deposited in each pass of the torch. This is accomplished by controlling the concentration and flow rates of the gas phase precursor reactants. Disadvantageously, the resulting refractive index curve is characterized by a plurality of perturbations. In a typical MCVD process-produced preform, about fifty layers are deposited. Contrasted to this, a preform which is made by some of other known techniques may be made with two hundred or more passes.

The perturbations or ripples in the refractive index curve are indicative of substantial differences in the index of refraction across the deposited layers. Significant perturbations in the refractive index curve result in the optical fiber having less than an expected bandwidth as well as additional loss. It is known that as the number of passes and hence the number of layers increases, the bandwidth increases.

Although the use of substantially more passes and hence more deposited layers improves the bandwidth of the resulting optical fiber, there is a drawback. Increased numbers of passes cause the process to become increasingly less economical.

What is desired and what seemingly is not available in the prior art are methods for making a preform from which may be drawn relatively high bandwidth, low loss multimode optical fiber. Such sought-after processes and apparatus should be capable of being integrated easily into conventional MCVD processes and apparatus.

The foregoing problems of the prior art have been solved by the method of this invention as defined in claim 1.

In a preferred embodiment there is provided a method of making a preform, from which a relatively high bandwidth low loss optical fiber may be drawn, includes the making of a preform tube comprising a core and a cladding layer, wherein the cladding layer has an index of refraction of a value lower than the maximum index of the core for energy of the wavelength to be transmitted. A moving stream of a vapor mixture including at least one compound glass-forming precursor together with an oxidizing medium is flowed into a silica substrate tube which is supported for rotation about a longitudinal axis of the tube. The tube is caused to be rotated about its longitudinal axis while the tube is heated so as to react the mixture and produce a glassy deposit of silica on the inner surface of the tube wall. The heating of the tube and its contents is accomplished by a moving zone of heat produced by a correspondingly moving heat source external to the tube in that combustion within the tube is avoided and in that temperature within the zone of heat, the composition of the vapor mixture, and the rate of introduction of the vapor mixture are maintained at values such that at least a part of the reaction takes place within the gaseous mixture at a position spaced from the inner wall of the tube. This produces a suspension of oxidic reaction product particulate material whereby the particulate material which while traveling downstream comes to rest on the inner surface of the tube wall within a region which extends from a position within the zone of heat. The moving zone of heat serves the dual functions of providing a nucleation site for homogeneous reaction to produce particulate matter, and a consolidation site for previously produced particulate matter.

The gas phase precursor reactants are caused to be flowed into the tube and this gas flow is controlled such that the amount of silica which is deposited varies in an intended manner among the layers so that the thickness of the deposited layers is decreased towards the centre of the tube to cause the variation in refractive index across each deposited layer of each pass to be relatively small. Preferably, in initial passes relatively large amounts of silica are deposited after which the amount deposited in each pass ramps down so that the layers adjacent to the longitudinal centerline of the preform tube have substantially less silica than in the outermost deposited layers. Afterwards, the preform tube is caused to be collapsed into a rod and then optical fiber is drawn from the rod. For multimode optical fiber which is made in accordance with this invention, the loss is less than the loss in an optical fiber drawn from a preform tube in which substantially constant volume layers of silica are deposited. Also, the bandwidth of the optical fiber is substantially higher.

### Brief Description of the Drawing

FIG. 1 is a front elevational view of an apparatus which is suitable for practicing a deposition process in accordance with this invention;
FIG. 2 is a front elevational view of a section of a glass substrate tube depicting observed conditions during processing;
FIG. 3 is an enlarged portion of a torch assembly and showing a temperature profile across a zone of heat which traverses a substrate tube;
FIG. 4 depicts an index profile of a preforms made by a conventional MCVD process;
FIGS. 5A-5B and 6A-6B depict simplified layer structures for preform tubes and preforms which have been made in accordance with a conventional MCVD process and with the methods of this invention, respectively;
FIG. 7 depicts the refractive index profile of a preform which is made by the methods of this invention;
FIG. 8 is a graph which depicts flow rates of constituents used in the deposition process of this invention plotted against the deposition layer number;
FIG. 9 depicts a histogram of loss distribution at a wavelength of 1.3 µm of optical fibers drawn from preforms which have been made in accordance with this invention;
FIG. 10 shows index of refraction profiles for preforms wherein processing conditions changed from one profile to another;
FIG. 11 depicts a curve which relates Rayleigh scattering loss to ripple amplitude on an index of refraction curve; and
FIGS. 12A and 12B depict transmitted and received pulses, with the associated Fourier Transform, using optical fiber made in accordance with this invention.

### Detailed Description

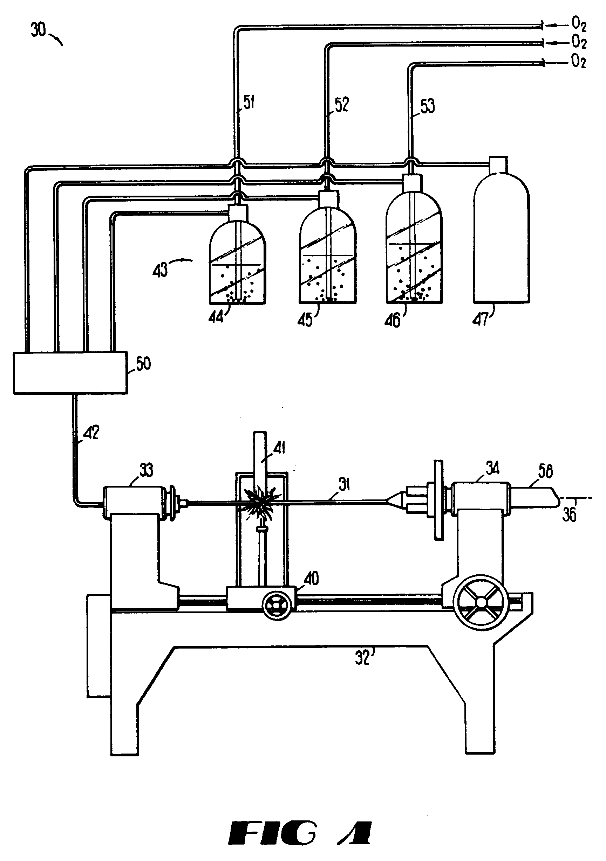

Referring now to FIG. 1 there is shown an apparatus, designated generally by the numeral 30, for heating and collapsing a glass substrate tube 31 to manufacture a silica glass rod, which is called a preform, from which a lightguide fiber is drawn. During a deposition mode, the substrate tube 31 is heated in order to cause the reaction products of gasses and/or dopants being fed into the tube to be fused to the inside wall thereof to provide a preform tube having an optically suitable profile for communications use. This process is referred to as modified chemical vapor deposition and is described in U.S. patent 4,217,027. In this description, the numeral 31 is used to designate both the substrate tube and the preform tube. The heating of the glass tube 31 is carried out while gas phase reactants are delivered to the tube. A system for this delivery is disclosed in U.S. Pat. No. 4,276,243.

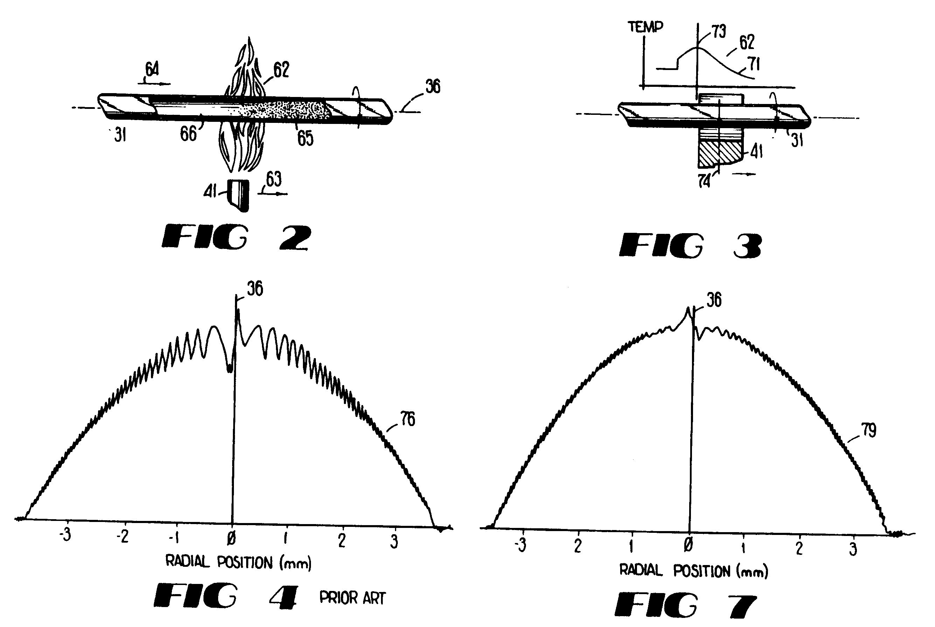

The apparatus 30 generally comprises a lathe 32 having a headstock 33 and a tailstock 34 which are used to support the glass starting tube 31 for rotation about its longitudinal axis 36 (see FIG. 2). The lathe 32 also includes a carriage 40 which is mounted for reciprocal movement along the lathe. Mounted on the carriage 40 is a torch assembly which is designated generally by the numeral 41. The torch assembly 41 may be that shown in U.S. patent 4,231,777 or 4,401,267.

A gaseous material is introduced into the tube 31 through an inlet tube 42 which is, in turn, connected to a source material reservoir 43. The gaseous material includes precursor reactants such as silicon tetrachloride, germanium tetrachloride, phosphorus oxychloride and di-chloro di-fluoro methane which are flowed from containers 44, 45, 46, and 47, respectively, along individual lines to a manifold 50. The deposited layers silica are generally doped with germanium, phosphorus or fluorine. Such a reservoir may include an oxygen inlet (not shown) which is connected to the manifold 50. The containers 44, 45, and 46 normally hold liquid reactant materials which are introduced into the tube 31 by means of carrier gas introduced through inlets 51, 52, and 53 with the arrangement being such that the carrier gas is bubbled through the liquids. Exiting material is exhausted from the tube 31 through an outlet 58. Not shown is an arrangement of mixing valves and shut off valves which may be utilized to meter flows and to make other necessary adjustments in composition. The apparatus of FIG. 1 is arranged so that the longitudinal axis of the tube 31 is generally horizontally disposed.

FIG. 2 is a front elevational view of a section of a substrate tube 31 as observed during deposition. Depicted is a portion of the torch assembly 41 which is constantly being moved with the carriage 40 to produce a moving zone of heat 62 (see also FIG. 3), or a hot zone as it is called commonly, which is traversing the tube 31 in a number of passes in the direction shown by arrow 63. The zone of heat 62 is a length of the tube 31 along which the temperature profile is formed by the torch assembly 41 as it passes along the tube. Gaseous material is introduced at the left end of tube 31 at the headstock end of the lathe and flows in the section of FIG. 2, which is broken away for purposes of clarity, in the direction shown by arrow 64. For typical MCVD processing conditions, two regions are clearly observable. A zone 65 downstream of the moving hot zone 62 is filled with a moving powdery suspension of particulate oxidic material, while a region 66, devoid of such particulate matter, defines the region within which fusion of previously deposited material is occurring.

The torch assembly 41 is adapted to cause a flow of combustible gases to produce flames which are directed toward the outer surface of the tube 31. By confining the heat from the burning gases to a desired surface area of the tube, the torch assembly 41 establishes the zone of heat 62 (see FIG. 3) having a temperature profile 71 at the surface of the tube. The mounting of the torch assembly 41 on the carriage 40 and its movement relative to the tube 31 causes the zone of heat to be moved along the length of the tube. The torch assembly 41 is supported from and is mounted on the carriage 40. Through adjustments of a supporting bracket, the torch assembly 41 may be moved within any one of a range of distances from the tube 31 or to any one of a plurality of positions about and spaced from the tube. The capability of adjusting the torch in a transverse direction aids in the control of the temperature profile along successive portions of the rotating tube as the torch assembly is moved along the length of the tube during a deposition mode.

The flows which are emitted to the surface result in flames which provide a temperature profile that facilitates the deposition of doped silicon dioxide, for example, on the inner surface of the tube 31 and subsequent collapse. The torch assembly 41 produces a zone of heat 62 (see FIG. 3) with temperatures ranging from about 1600°C during a deposition mode to about 2200°C during a collapse mode. As can be seen in FIG. 3, the zone of heat 62 extends ahead of the torch assembly 41 and behind it. Because the torch assembly 41 moves along the tube 31, a maximum temperature 73 within the zone of heat trails a centerline 74 of the torch assembly 41. Assuming that no adjustment to gas flow controllers is made, the faster the torch assembly is moved, the greater the distance between the maximum temperature 73 of the heat zone and the centerline 74 of the torch assembly.

Oxygen reacts with the silicon tetrachloride and appropriate dopants. Predominantly oxides of silicon tetrachloride and dopant form as they enter the hot zone. Downstream of the torch, the tube is relatively cool and oxide particles are deposited there and fused later by the moving torch. The remaining reaction products are exhausted at the tailstock and of the lathe.

It has been the custom to deposit substantially equal volume layers of silica inside the tube 31. Inasmuch as the diameter of each successive layer decreases from the previous one, the thickness of each successive layer in the preform tube increases slightly.

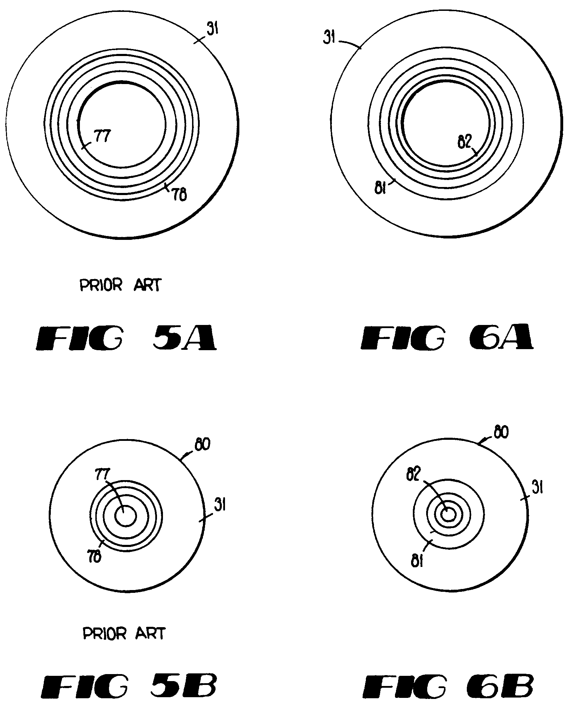

Multiple passes are used to provide a graded index of refraction profile. As is known, there is a compromise between deposition layer thickness and smoothness of the refractive index profile. Higher deposition rates usually result in a smaller number of thick layers and an index profile 76 having significant pertubations (see FIG. 4).

After the deposition of a plurality of layers of silica inside the substrate tube 31 to provide a preform tube (see FIG. 5A), the preform tube is caused to be collapsed. The moving torch assembly 41 is used to heat the tube to a temperature in the range of about 2200 °C for a fused silica tube. Surface tension and/or external pressure cause the tube to shrink rapidly and collapse into a solid rod 80 (see FIG. 5B) which is referred to as a preform. Subsequently, optical fiber is drawn from the preform and taken up as is shown, for example, in U.S. patent 4,370,355.

The prior art process of depositing constant volume layers of silica causes the thicknesses of the inner layers to be greater than the thicknesses of the outer layers (see FIG. 5A). For example, the thickness of an innermost layer 77 in FIG. 5A is greater than that of an outermost layer 78. As can be seen in FIG. 4, the amplitude of the perturbations or ripples in the refractive index profile is very pronounced in those layers closest to the longitudinal axis of the preform which is the longitudinal axis 36 of the glass starting or substrate tube.

It should be understood that the thickness changes between layers in the preform tube 31 are slight but are exaggerated in FIG. 5A for purposes of clarity. Of course, when the preform tube 31 is collapsed into the preform 80, the thickness differences become more pronounced (see FIG. 5B).

The theoretical bandwidth that can be achieved in multimode optical fiber produced by MCVD is on the order of about 10 GHz-Km. Typically, however, the maximum bandwidth achieved on production optical fiber is on the order of about 1.5 GHz-Km. As mentioned hereinbefore, the pronounced amplitude of the perturbations in those layers adjacent to the longitudinal axis of the substrate tube (see FIG. 4) causes a reduction in bandwidth.

This problem may be overcome by using a higher level of phosphorus, but this remedy only leads to other problems. For example, the higher the level of phosphorous, the more apt the material is to react with the atmosphere and cause the appearance of moisture in the resulting preform. This results in a degradation of the performance of optical fiber drawn therefrom, particularly after a period of use. Moreover, the use of excessive amounts of phosphorus causes the resulting optical fiber to have a radiation resistance problem. Under exposure to environmental radiation, broken bonds associated with the phosphorus form color centers which result in increased loss. Still further, the use of excessive levels of phosphorus affects adversely the shape of the optical fiber; the higher the phosphorus level, the greater the ovality of the drawn fiber. This of course, causes problems in interconnection.

These problems have been overcome by modifying the conventional MCVD process in which a constant volume of silica is deposited in each pass of the torch resulting in equal volume layers of silica. In the constant volume process, the thickness of each layer beginning from that contiguous to the clad in a direction toward the longitudinal axis of the preform tube 31 increases (see again FIG. 5A). With the process of this invention, the volume of silica deposited is varied from one layer to another in an intended manner to cause the variation in the index of refraction across each layer to be relatively small. As a result, the amplitude of the perturbations on the index of refraction curve is reduced which results in an increased bandwidth. Further this causes the total loss of the optical fiber drawn from the preform 80 to be significantly less than that for optical fiber drawn from a preform made with substantially constant volume layers of silica.

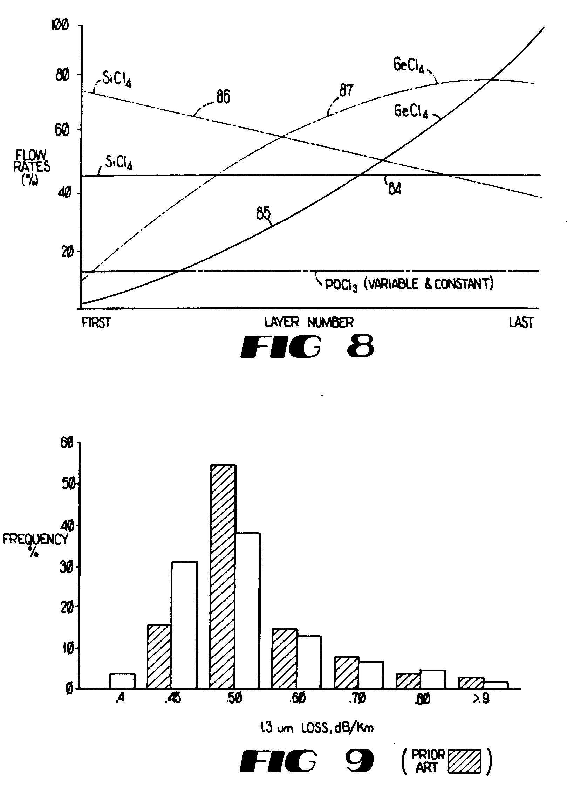

In one embodiment, the volume of silica deposited in each successive pass is ramped down in such a manner as to cause the thickness of a layer 81 (see FIG. 6A) contiguous to the cladding layer or substrate tube to exceed that of the innermost layer 82. The outermost layer 81 typically has a thickness which is greater than that of the innermost deposited layer made by conventional MCVD processes. Also, the thickness of the innermost layer 82 which is deposited in the preform tube 31 shown in FIG 6A is about one third that of the innermost layer 77 of a typical preform tube 31 of FIG. 5A made by a conventional MCVD process. In FIG. 6B there is shown the preform tube 31 of FIG. 6A after it has been collapsed into a preform 80. It should be understood that the thickness of the outermost layer 81 of the preform 31 of FIG. 6A may be greater or less than that of the outermost layer 78 of FIG. 5A. What is important is that in the process of this invention, the amount of deposited silica varies as among the layers.

Going now to FIGS. 4 and 7, it can be seen that the refractive index profile 76 of a preform which is made in accordance with conventional MCVD processes includes perturbations adjacent to the longitudinal axis 36 which are substantially greater in amplitude than corresponding perturbations of a preform made in accordance with this invention (see profile designated 79 in FIG. 7). The characteristics of the perturbations in the index of refraction curve are a function of the amount of heat applied during deposition, the thickness of the layer, and the chemistry of the processing conditions. Because the layer deposits are made inside the substrate tube 31 and heat is applied to an outer surface of the tube, it is far easier to apply the thinner layer of the prior art contiguous to the clad than the thicker layer of the process of this invention. However, the increase in thickness is not that great and because that outermost layer is the layer closest to the heat source, the layer is deposited with relative ease. On the other hand, it is difficult to deposit a constant volume innermost layer because it is farthest from the heat source. With the process of this invention, the innermost layer is thinner than those deposited with conventional MCVD processes, and with less heat required to sinter that deposit, the amplitudes of the perturbations in the index of refraction curve are substantially less. It has been determined that the amplitudes of the most significant perturbations in the index of refraction curve adjacent to the longitudinal axis of a preform tube produced by conventional MCVD techniques are about three times those of the innermost layers deposited in accordance with the methods of this invention.

Viewing now FIG. 8, it can be seen that with a constant layer volume of silica method of deposition (see line designated 84 in FIG. 8), the germanium doping constituent is increased in a non-linear fashion, as shown by a line curve designated 85. As also can be seen from FIG. 8, a broken line designated 86 represents a ramped down silica deposit schedule in accordance with this invention. Accompanying such a planned silica deposit is a germanium tetrachloride level which is non-linear (see broken curve designated 87 in FIG. 8) but which levels off after a layer disposed between the first and last layers. The index of refraction is affected by the concentration of germanium in a solution of germanium and silica. There exists the freedom to decrease the silica, but the amount of germanium must be determined to obtain the desired refractive index profile.

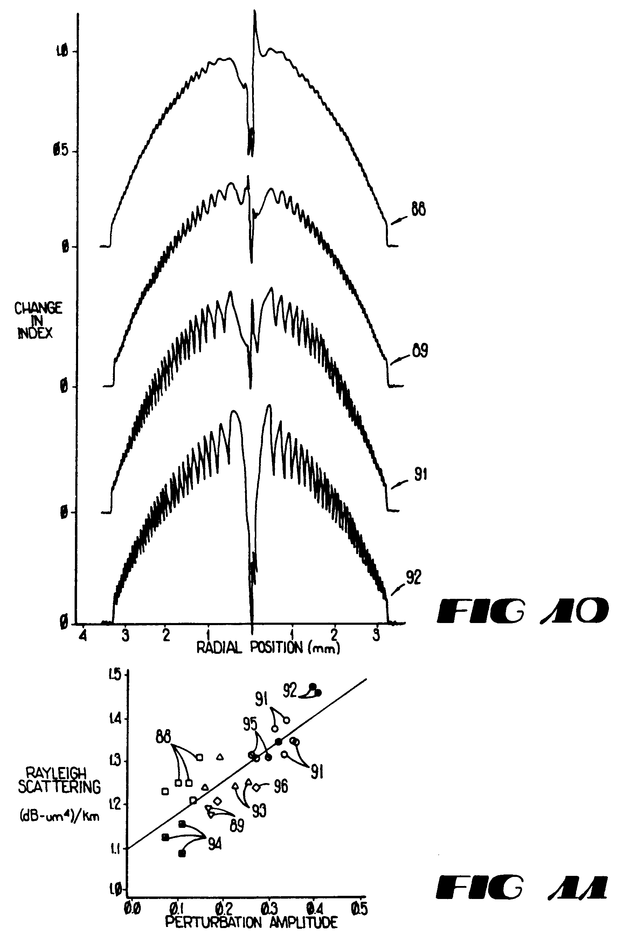

Referring now to FIG. 9, there is shown a distribution of losses at a wavelength of 1.3 µm. Comparing the refractive index profile curves of FIGS. 4 and 7, it can be seen that the outer portions of the two curves have similar perturbation amplitude patterns. However, the center halves of the two curves differ markedly and hence the loss for optical fiber made in accordance with the conventional process is greater than that for the new.

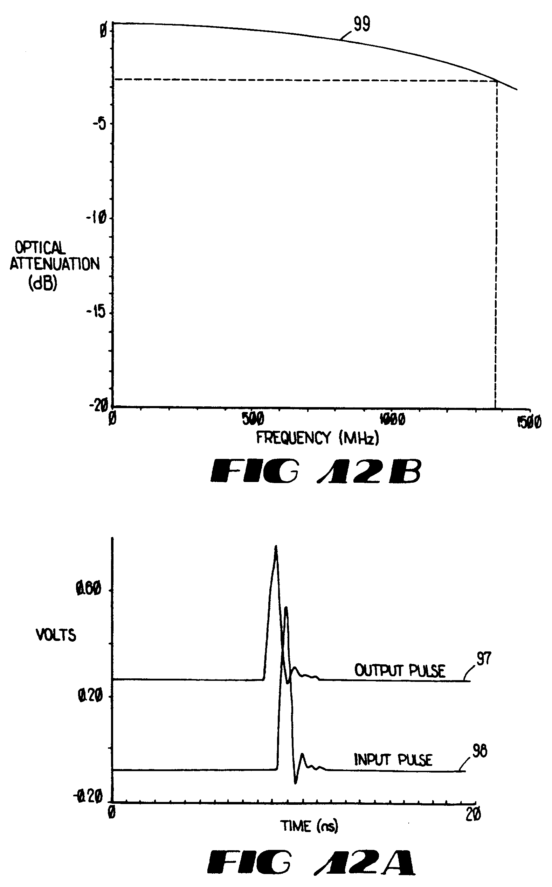

The refractive index profile of a preform is affected by processing conditions used during either deposition or collapse. Profiles designated by the numerals 88, 89, 91, and 92 are shown in FIG. 10 and differ only in the processing conditions, not in the chemistry. As mentioned earlier herein, phosphorus content also affects the layer structure and the changes in layer structure appear to be similar in magnitude to those found for the processing variations. Various preforms produced using different processing conditions during collapse or deposition or having different phosphorus contents were drawn into optical fiber and the spectral loss of the fibers was measured. The magnitude of the layer structure can be characterized from the preform profile with a normalized perturbation amplitude defined as the difference in the change of refractive index across a layer divided by the average change in refractive index for that layer. The correlation between Rayleigh scattering and layer structure is shown in FIG. 11 wherein values of the Rayleigh scattering coefficient are plotted against values of the normalized perturbation amplitude. Points 88, 89, 91, and 92 on the graph shown in FIG. 11 correspond to the preforms of FIG. 10 made with differing processing conditions whereas points designated 93, 94, 95 and 96 correspond to optical fiber samples drawn from preforms made with differing phosphorus levels. As can be seen, the effect of layer structure on Rayleigh scattering is large and does not depend on how the layer structure is changed.

The process of this invention provides an optical fiber having increased bandwidth. Whereas a typical bandwidth for optical fiber made in accordance with conventional MCVD processes is about 1.5 GHz-Km, it is about 2.4 GHz-Km for that made with the process of this invention. In some instances, optical fiber made in accordance with this invention has achieved a bandwidth of over about 6.0 GHz-Km which approaches the theoretical limit for multimode optical fiber. This advantage translates into the preservation of pulse shape during transmission. With conventional multimode optical fiber, the received pulse differs from the transmitted pulse because of distortion. As can be seen from the time domain curves in FIG. 12A, the shape of a received pulse 97 for the optical fiber of this invention is substantially the same shape as that of a transmitted pulse 98, even after traversing 2.4 kilometers. In FIG. 12B, there is shown a graph 99 of optical attenuation versus frequency which represents a calculation of bandwidth from the information in the curves of FIG. 12A.

Advantageously, the bandwidth of an optical fiber drawn from a preform produced in accordance with the methods of this invention is less sensitive to the method of exciting the optical fiber than those produced by prior art MCVD processes. For example, excitation by a truncated as opposed to a uniform power distribution affects much less the bandwidth of optical fiber drawn from a preform made by the methods of this invention than one drawn from a preform made by a prior art MCVD process.

It has been found that, the deposition rate can be increased by using the methods of this invention. For example, whereas in the prior art MCVD process, a deposition rate of about 1.0 gm/min. for a 19 x 25 mm tube was expected, deposition rates for the process of this invention are about 1.25 to 1.5 grams per minute.

For a given thickness of a deposited layer inside the substrate tube 31, there is a minimum temperature which is needed to sinter the deposited material and a maximum temperature below which unwanted bubbles are not formed. By reducing the thickness of the layers from the outermost to the innermost layers, the temperature needed to sinter the innermost layers is reduced and is reduced to a value well below that at which bubbles are formed in the preform tube. With the relatively thick innermost layers of prior art MCVD process, more heat energy is required to be conducted through the tube wall, the priorly deposited layers and the thickness of the innermost layer itself thereby increasing the possibility of bubble formation.

It has been found that the deposition rate for the first several outermost layers in accordance with the methods of this invention may be about two to three times that for the outermost layer of conventional MCVD processes. On the other hand, the deposition rate for the innermost layer 82 of FIG. 6A may be about two-thirds that of the conventional MCVD processes. The net average result is a higher rate for the methods of the invention.

From the foregoing, it is concluded that the methods of this invention result not only in increased bandwidth but also in reduced loss. As a result, the optical fiber which is drawn from a preform made in accordance with this invention yields results comparable to those achieved by depositing significantly more layers within a tube than in a conventional prior art MCVD process but at lower deposition times and costs.

## Claims

1. A method of producing a multimode optical fiber having a relatively smooth refractive index profile, said method including the steps of providing a preform from which the optical fiber may be drawn, said step of providing including the steps of supporting a substrate tube (31) for rotation about its longitudinal axis, flowing gas phase precursor reactants (44-47) into the tube, causing the tube to rotate about its longitudinal axis, moving a source of heat along the tube in a plurality of passes during each of which a layer of glassy material is deposited, the temperature being controlled to cause reaction products to be deposited as layers of glassy material inside the tube, and collapsing the substrate having the deposited layers therein to provide a preform, and drawing optical fiber from the preform, characterized in that the thickness of the deposited layers is decreased towards the centre of the tube so that the steps in the refractive index in the preform can be smaller towards the centre of the core.

2. The method of claim 1, wherein the thickness of the deposited layers is controlled by controlling the flow rate of the precursor reactants.

3. The method of claim 1, wherein the thickness of the deposited layers is controlled by controlling the concentration levels of the precursor reactants.

4. The method of claim 1, wherein the thickness of the deposited layers is controlled by controlling the flow rate and the concentration levels of the precursor reactants.

5. The method of claim 1, wherein an outermost layer of glassy material deposited in the substrate tube has a thickness which is substantially greater than an outermost layer in a substrate tube having substantially constant volume deposits of glassy material therein.

6. The method of claim 1, wherein the optical fiber includes a core and a cladding, wherein the cladding has an index of refraction of a value lower than the maximum index of refraction of the core for energy of the wavelength to be transmitted, and wherein the gas phase reactants are provided by introducing a moving stream (via 42) of vapor mixture (via 50) including at least one compound glass-forming precursor (44-47) together with an oxidizing medium (51-53) into the tube 31; while subjecting successive increments of length of the tube to a zone of heat (62) in each of a plurality of passes of the source of heat along the length of the tube to react the mixture and deposit the plurality of layers of silica within the tube with the innermost one of the layers being in engagement with the inner surface of the tube, the temperature within the zone of heat, the composition of the vapor mixture and the rate of introduction of the vapor mixture being maintained at values such that at least a part of the reaction occurs within the gaseous mixture at a position spaced from the inner wall of the tube thereby producing a suspension of oxidic reaction product particulate material which while traveling downstream comes to rest on the inner surface of the tube within a region which extends from a position within the zone of heat, the moving zone of heat providing nucleation sites for previously produced particulate matter; the deposition of layers within the tube being controlled to provide the decreased thickness of the layers towards the tube centre, whereby the layers of silica which are formed inside the tube vary in a predetermined manner, whereby the amplitude of the variation in refractive index within each layer is relatively small.

7. The method of claim 6, wherein germanium tetrachloride and silicon tetrachloride are flowed into the tube and the germanium tetrachloride is caused to react along with the silicon tetrachloride and the rate of flow of the germanium is decreased for each layer in a direction toward the longitudinal axis of the tube and the silicon tetrachloride is flowed in successively decreasing amounts.

8. The method of claim 7, wherein the decrease in volume of silica as between layers is controlled to cause the volume to decrease in a substantially constant manner and wherein the optical fiber which is drawn from the optical preform has a bandwidth of at least about 2.4 GHz-Km.

## Patentansprüche

1. Verfahren zur Herstellung einer optischen Multimodefaser mit einem relativ glatten Brechungsindex-Profil, mit folgenden Merkmalen:
eine Vorform, von der die optische Faser gezogen werden kann, wird bereitgestellt und umfaßt folgende Unterschritte:
ein Substratrohr (31) wird zur Drehung um seine Längsachse gestützt;
Vorläufer-Reaktionsstoffe (44-47) strömen in Gasphase in das Rohr;
das Rohr wird um seine Längsachse zum Drehen gebracht;
eine Wärmequelle wird entlang des Rohres in einer Mehrzahl von Durchgängen bewegt, wobei jeweils eine Schicht glasigen Materials niedergeschlagen wird;
die Temperatur wird so gesteuert, daß die Reaktionsprodukte als Schichten glasigen Materials im Inneren des Rohres niedergeschlagen werden;
das Substrat mit den abgeschiedenen Schichten wird zur Bildung einer Vorform kollabieren lassen und optische Fasern werden von der Vorform gezogen,
dadurch gekennzeichnet, daß die Dicke der abgeschiedenen Schichten zur Mitte des Rohres abnimmt, so daß die Stufen des Brechungsindex in der Vorform zur Mitte des Kerns kleiner sein können.

2. Verfahren nach Anspruch 1,
dadurch gekennzeichnet, daß die Dicke der abgeschiedenen Schichten dadurch gesteuert wird, daß die Größe des Stroms der Vorläufer-Reaktionsstoffe gesteuert wird.

3. Verfahren nach Anspruch 1,
dadurch gekennzeichnet, daß die Dicke der abgeschiedenen Schichten dadurch gesteuert wird, daß die Konzentrationspegel der Vorläufer-Reaktionsstoffe gesteuert wird.

4. Verfahren naach Anspruch 1,
dadurch gekennzeichnet, daß die Dicke der abgeschiedenen Schichten dadurch gesteuert wird, daß die Größe des Stroms und die Konzentrationspegel der Vorläufer-Reaktionsstoffe gesteuert werden.

5. Verfahren nach Anspruch 1,
dadurch gekenzeichnet, daß die äußerste Schicht des in dem Substratrohr abgeschiedenen glasigen Materials eine Dicke aufweist, die wesentlich größer ist als die der äußersten Schicht in einem Substratrohr mit glasigen Materialabscheidungen von im wesentlichen konstantem Volumen.

6. Verfahren nach Anspruch 1,
dadurch gekennzeichnet, daß die optische Faser einen Kern und einen Mantel umfaßt, daß der Mantel einen Brechungsindex mit einem kleineren Wert als der maximale Brechungsindex des Kerns für die Energie der zu übertragenden Wellenlänge aufweist und daß die Reaktionsstoffe in Gasphase dadurch vorgesehen werden, daß ein sich bewegender Strom (über 42) einer Dampfmischung (über 50) eingeführt wird, die mindestens eine Verbindung des glasbildenden Vorläufers (44-47) zusammen mit einem oxidierenden Medium (51-53) in das Rohr (31) umfaßt, während aufeinanderfolgende Stücke des Rohrs in einer Heizzone (62) bei jedem der Mehrzahl der Durchgänge der Wärmequelle entlang des Rohres einer Reaktion mit der Mischung ausgesetzt und eine Mehrzahl von Schichten von Silica innerhalb des Rohres niedergeschlagen werden, wobei die innerste Schicht in Berührung mit der Innenoberfläche des Rohres steht, wobei ferner die Temperatur innerhalb der Heizzone, die Zusammensetzung der Dampfmischung und die Zuführungsrate der Dampfmischung auf solchen Werten gehalten werden, daß mindestens ein Teil der Reaktion innerhalb der gasförmigen Mischung an einer Stelle entfernt von der inneren Wandung des Rohres stattfindet, wobei eine Suspension des partikelförmigen Materials aus oxidischen Reaktionsprodukten erzeugt wird, die während ihrer Wanderung stromab auf der Innenoberfläche des Rohrs in einem Bereich zur Ruhe kommen, der sich von einer Stelle innerhalb der Heizzone erstreckt;
daß ferner die sich bewegende Heizzone Kernbildungsplätze für zuvor erzeugtes partikelförmiges Material schafft, daß die Abscheidung der Schichten innerhalb des Rohrs so gesteuert wird, daß die abnehmende Dicke der Schichten zur Rohrmitte zustande kommt, wobei die Schichten des im Rohrinneren gebildeten Silika sich in vorbestimmter Weise ändern und der Ausschlag der Änderung des Brechungsindex innerhalb dieser Schicht relativ klein ist.

7. Verfahren nach Anspruch 6,
dadurch gekennzeichnet, daß Germanium-Tetrachlorid und Silicium-Tetrachlorid in das Rohr strömen und daß Germanium-Tetrachlorid zur Reaktion mit dem Silicum-Tetrachlorid gebracht und die Größe des Germaniumstroms für jede Schicht in Richtung zur Längsachse des Rohrs verkleinert wird und daß das Silicium-Tetrachlorid in aufeinanderfolgend abnehmenden Beträgen zum Strömen gebracht wird.

8. Verfahren nach Anspruch 7,
dadurch gekennzeichnet, daß die Volumenabnahme des Silica zwischen den Schichten so gesteuert wird, daß das Volumen in im wesentlichen konstanter Weise abnimmt und daß die von der optischen Vorform gezogene optische Faser eine Bandbreite von mindestens ungefähr 2,4 GHz km aufweist.

## Revendications

1. Un procédé de fabrication d'une fibre optique multimode ayant un profil d'indice de réfraction relativement régulier, ce procédé comprenant les étapes qui consistent à produire une préforme à partir de laquelle on peut étirer la fibre optique, cette étape de production de préforme comprenant les étapes suivantes : on supporte un tube de substrat (31) pour permettre sa rotation autour de son axe longitudinal, on fait circuler dans le tube des réactifs précurseurs en phase gazeuse (44-47), on fait tourner le tube autour de son axe longitudinal, on déplace une source de chaleur le long du tube, en un ensemble de passes au cours de chacune desquelles on dépose une couche de matière vitreuse, la température étant commandée pour que des produits de réaction se déposent sous la forme de couches de matière vitreuse à l'intérieur du tube, et on rétreint le substrat contenant les couches déposées, pour former une préforme; et à étirer une fibre optique à partir de la préforme, caractérisé en ce qu'on diminue l'épaisseur des couches déposées en direction du centre du tube, de façon que l'amplitude des variations de l'indice de réfraction dans la préforme puisse être plus faible vers le centre du coeur.

2. Le procédé de la revendication 1, dans lequel on commande l'épaisseur des couches déposées en commandant le débit des réactifs précurseurs.

3. Le procédé de la revendication 1, dans lequel on commande l'épaisseur des couches déposées en commandant les niveaux de concentration des réactifs précurseurs.

4. Le procédé de la revendication 1, dans lequel on commande l'épaisseur des couches déposées en commandant le débit et les niveaux de concentration des réactifs précurseurs.

5. Le procédé de la revendication 1, dans lequel la couche la plus extérieure de la matière vitreuse qui est déposée dans le tube de substrat a une épaisseur qui est notablement supérieure à celle de la couche la plus extérieure dans un tube de substrat contenant des dépôts de matière vitreuse de volume pratiquement constant.

6. Le procédé de la revendication 1, dans lequel la fibre optique comprend un coeur et une gaine, dans lequel la gaine a un indice de réfraction d'une valeur inférieure à l'indice de réfraction maximal du coeur pour l'énergie correspondant à la longueur d'onde à transmettre, et dans lequel les réactifs en phase gazeuse sont apportés en introduisant dans le tube (31) un écoulement (par 42) d'un mélange de vapeurs (formé par 50) qui contient au moins un précurseur de formation de verre de type composé (44-47), en compagnie d'un milieu oxydant (51-53); tout en soumettant des incréments successifs de la longueur du tube à l'action d'une zone de chaleur (62), au cours de chaque passe d'un ensemble de passes de la source de chaleur sur la longueur du tube, pour faire réagir le mélange et pour déposer l'ensemble de couches de silice à l'intérieur du tube, avec la couche la plus intérieure en contact avec la surface intérieure du tube, la température dans la zone de chaleur, la composition du mélange de vapeurs et le débit d'introduction du mélange de vapeurs étant maintenus à des valeurs telles qu'au moins une partie de la réaction se produise à l'intérieur du mélange gazeux, en une position espacée de la paroi intérieure du tube, pour produire ainsi une suspension de particules de matière consistant en produits de réaction d'oxydation qui, tout en circulant vers l'aval, s'immobilisent sur la surface intérieure du tube, à l'intérieur d'une région qui s'étend depuis une position située dans la zone de chaleur, la zone de chaleur mobile produisant des sites de nucléation pour des particules de matière qui ont été produites précédemment; le dépôt de couches à l'intérieur du tube étant commandé de façon à produire l'épaisseur réduite des couches en direction du centre du tube, grâce à quoi les couches de silice qui sont formées à l'intérieur du tube varient d'une manière prédéterminée, ce qui fait que l'amplitude de la variation de l'indice de réfraction dans chaque couche est relativement faible.

7. Le procédé de la revendication 6, dans lequel on fait circuler dans le tube du tétrachlorure de germanium et du tétrachlorure de silicium, et on fait réagir le tétrachlorure de germanium avec le tétrachlorure de silicium, et on diminue le débit de germanium pour chaque couche en direction de l'axe longitudinal du tube, et on fait circuler le tétrachlorure de silicium en quantités successivement décroissantes.

8. Le procédé de la revendication 7, dans lequel on commande la diminution du volume de silice entre les couches pour faire diminuer le volume d'une manière pratiquement constante, et dans lequel la fibre optique qui est étirée à partir de la préforme optique a une largeur de bande d'au moins environ 2,4 GHz-km.
